Europäisches Patentamt

(19) European Patent Office

Office européen des brevets

(11) Numéro de publication : **0 289 552 B1**

(12) **FASCICULE DE BREVET EUROPEEN**

(45) Date de publication du fascicule du brevet :
12.06.91 Bulletin 91/24

(51) Int. Cl.⁵ : **B60C 13/00**

(21) Numéro de dépôt : 87907237.9

(22) Date de dépôt : 29.10.87

(86) Numéro de dépôt international :
**PCT/FR87/00429**

(87) Numéro de publication internationale :
**WO 88/03483 19.05.88 Gazette 88/11**

(54) **PNEUMATIQUE AVEC FLANCS DECORES.**

(30) Priorité : 06.11.86 FR 8615478

(43) Date de publication de la demande :
09.11.88 Bulletin 88/45

(45) Mention de la délivrance du brevet :
12.06.91 Bulletin 91/24

(84) Etats contractants désignés :
**BE CH DE IT LI LU NL**

(56) Documents cités :
EP-A- 0 117 904
DE-A- 3 414 438
FR-A- 1 435 896

(73) Titulaire : **HUTCHINSON**
**2 rue Balzac**
**F-75008 Paris (FR)**

(72) Inventeur : **SEE, Daniel**
**37, rue de Turenne**
**F-75003 Paris (FR)**

(74) Mandataire : **Orès, Bernard et al**
**Cabinet ORES 6, Avenue de Messine**
**F-75008 Paris (FR)**

Jouve, 18, rue Saint-Denis, 75001 PARIS

## Description

La présente invention est relative à des pneumatiques pour véhicules automobiles tels que voitures, vélos, cyclomoteurs, scooters, motos, etc... à flancs colorés pourvus de motifs décoratifs de différentes couleurs.

On sait que les motifs décoratifs dont sont pouvus les flancs de pneumatiques sont réduits au strict minimum, tels que les marques de commerce et/ou de fabrique ainsi que les indications des dimensions des pneumatiques, notamment lorsque l'incorporation des motifs décoratifs se fait par gravure d'un moule, à savoir par une opération qui est coûteuse et qui affaiblit les flancs des pneumatiques et favorise la formation de fissurations dans ces derniers.

Le choix des matériaux constitutifs des flancs de pneumatiques pourvus de motifs décoratifs constitue donc un point important de la définition de la structure d'un pneumatique, parce que de ce choix dépendent non seulement les effets esthétiques du pneumatique, mais aussi leur capacité de présenter un comportement dynamique satisfaisant, à savoir sans fissurations et mise hors service indésirée, lors du roulage.

L'importance du choix précité se fait sentir de façon encore plus accentuée avec les pneumatiques destinés à rouler à l'état dégonflé, pour lesquels les flancs sont soumis à des contraintes particulièrement sévères.

Pour éviter d'affaiblir les flancs d'un pneumatique lors de l'incorporation de motifs décoratifs, on a proposé de réaliser la décoration des flancs par pose de vignettes ou par décalcomanie. Toutefois, la tenue de tels motifs décoratifs est très faible et les opérations nécessaires sont très consommatrices en temps.

De plus, on est très limité dans le choix d'une variété importante de couleurs. Cette limitation est en pratique due au fait que le matériau normalement utilisé pour les flancs d'un pneumatique est constitué par du caoutchouc chargé de noir de carbone (cf. la Demande de Brevet FR-2412426, page 1, lignes 24 à 30). Toutefois, lorsque l'on utilise, pour les motifs décoratifs précités, un élastomère d'une couleur différente de la couleur (noire) du fond des flancs (réalisé en noir de carbone), la détérioration des flancs par fissuration réduit sensiblement et relativement tôt l'efficacité de la carcasse d'un pneumatique à cause du fait que l'élastomère en une couleur autre que le noir de carbone (utilisé sur un fond constitué par un élastomère chargé avec du noir de carbone) n'est pas renforcé par une telle charge (cf. la Demande de Brevet FR-2371307, page 1, lignes 7 à 19).

Cela revient à dire que, en l'état actuel de la technique – et mises à part la décalcomanie et la pose de vignettes – il reste la possibilité d'avoir recours à la gravure du moule et donc de choisir entre la solution esthétiquement limitée, mais mécaniquement plus satisfaisante, constituée par des motifs décoratifs, par exemple en relief, en une couleur unique définie par la couleur noire d'un élastomère chargé de noir de carbone et la solution esthétiquement plus satisfaisante, mais mécaniquement moins bonne, constituée par des motifs décoratifs d'une couleur différente de la couleur noire du fond des flancs en élastomère chargé de noir de carbone.

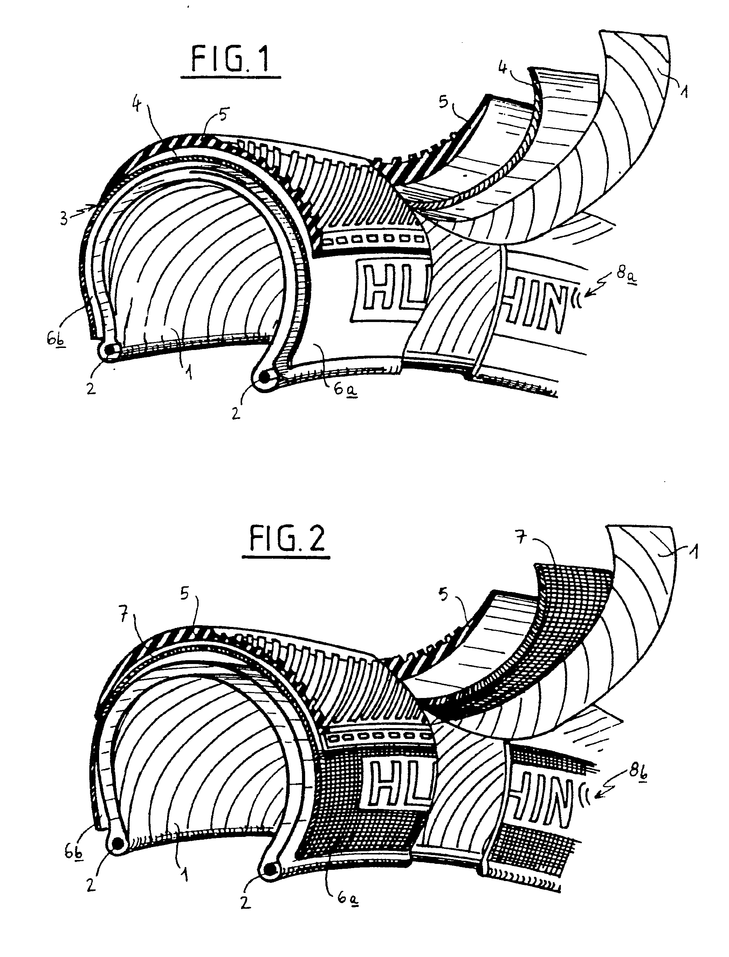

Il est vrai que les inconvénients de cette deuxième solution sont éliminés, dans le document FR-2371307 précité, en ménageant la couche colorée en élastomère (dont la couleur est différente de la surface noire en élastomère chargé de noir de carbone des flancs d'un pneu) en retrait par rapport à la surface des flancs, toutefois cette solution est coûteuse à cause des complications dues à la gravure du moule. Un pneumatique selon le préambule de la revendication est connu, p.e. du figure 1 des dessins.

La présente invention a pour but de pourvoir à un pneumatique ayant des flancs colorés pourvus de motifs décoratifs dont la couleur est différente de la couleur du fond des flancs, lequel pneumatique répond mieux aux nécessités de la pratique que les pneumatiques à flancs décorés antérieurement connus, notamment en ce que :

– il n'existe pratiquement pas de limitations pour les couleurs et nuances de couleurs dans lesquelles peuvent être réalisés les motifs décoratifs des flancs de pneumatiques et donc pour les effets esthétiques correspondants ;

– en même temps que les effets esthétiques, également la souplesse des flancs de pneumatique en particulier, et du pneumatique dans son ensemble, est améliorée, ce qui confère au pneumatique un comportement dynamique très satisfaisant, et ce aussi en condition de roulage à plat lors d'une crevaison accidentelle, lorsqu'il s'agit de pneumatique pour roulage à l'état dégonflé ;

– le pneumatique présente une durée de vie supérieure par suppression des craquelures ou fissurations que normalement subissent les élastomères sous l'action des rayons U.V. du soleil et de l'ozone atmosphérique, qui induisent un vieillissement prématuré du pneumatique, et

– la mise en oeuvre du procédé correspondant ne requiert qu'un faible coût.

La présente invention a pour objet un pneumatique comportant :

– une couche interne, constituant la carcasse du pneumatique et définie par une première nappe textile enduite d'élastomère, dans laquelle sont noyées deux tringles de renforcement disposées à proximité des bords de cette première nappe et parallèlement à ces bords, dans des zones définissant des talons du pneumatique,

– une couche externe, disposée sur toute la largeur de la carcasse et dont deux portions latérales définissent les flancs du pneumatique au moins une desdites portions latérales, à savoir, au moins un flanc, est pourvue de motifs décoratifs, chaque flanc comportant une zone extrême destinée à venir en contact avec le rebord ou crochet d'une jante, tandis qu'une portion centrale constitue le support d'une

– bande de roulement dudit pneumatique, lequel pneumatique est caractérisé en ce que ladite couche externe, comprenant les flancs du pneumatique, est constituée par une deuxième nappe textile enduite d'un élastomère transparent et ayant un coloris définissant un coloris de fond pour le flanc correspondant, et en ce que les motifs décoratifs sont réalisés en une ou plusieurs couleurs, différentes de la couleur de la nappe textile correspondant aux flancs du pneumatique, et qui sont incorporés dans cette deuxième nappe textile.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels :

– la figure 1 est une vue en perspective, avec arrachement partiel, d'un pneumatique à flancs colorés et comportant des motifs décoratifs, conforme à l'Art antérieur,

– la figure 2 est une vue, également en perspective et avec arrachement partiel, d'un pneumatique à flancs colorés et comportant des motifs décoratifs, conforme à la présente invention,

– la figure 3 est une vue schématique en coupe axiale d'un pneumatique selon la figure 2 monté sur une jante à crochets.

Il doit être bien entendu, toutefois, que ces dessins et les parties descriptives correspondantes, sont donnés uniquement à titre d'illustration de l'objet de l'invention, dont ils ne constituent en aucune manière une limitation.

La présente invention sera mieux comprise en faisant référence d'abord à la fabrication d'un pneumatique selon la technique de l'Art antérieur. A cet effet, on peut utilement se référer à la figure 1 qui représente le pneumatique fini, obtenu à l'aide du procédé connu.

Ce procédé consiste à :

a) poser une nappe tramée 1 sur un tambour de confection (non représenté),

b) poser des tringles 2 de renforcement sur des zones latérales extrêmes de cette nappe 1, correspondant aux talons du pneumatique que l'on veut fabriquer,

c) rabattre lesdites zones latérales extrêmes de la nappe 1 sur les tringles 2 de renforcement,

d) poser sur toute la largeur de la nappe 1 une chape 3 comportant une nappe 4 en caoutchouc et une bande de roulement 5, cette dernière ayant été assemblée préalablement avec la nappe 4.

Tel que le montre la figure 1, au moins une des portions latérales apparentes 6a et 6b de la nappe 4 (à savoir, qui ne sont pas recouvertes par la bande de roulement 5) présente un coloris uni, généralement blanc, sur lequel sont visibles des motifs décoratifs 8a correspondant, par exemple, à la dénomination sociale de la Demanderesse, qui peuvent être obtenus à l'aide d'un des procédés de l'Art antérieur décrits plus haut et qui présentent les inconvénients également indiqués lors de la description correspondante de l'Art antérieur.

Or, la présente invention consiste à remplacer l'étape d) du procédé connu, comportant les étapes a) à d) précitées, par les opérations suivantes :

d₁) pose d'une nappe textile 7 ayant un certain coloris (différent de celui de la bande de roulement) et enduite d'un élastomère transparent, laquelle nappe 7 comporte des motifs décoratifs 8b incorporés par tissage ou autre, selon des techniques connues des techniciens en la matière, et réalisés en des couleurs différentes de la couleur de la nappe 7, qui est la couleur de fond pour les motifs décoratifs 8b,

d₂) pose de la bande de roulement 5.

Les avantages, tels que décrits plus haut, consistent en la possibilité d'obtenir des effets décoratifs jamais réalisés pour les flancs d'un pneu avec toutes les couleurs et nuances de couleurs possibles et qui sont l'apanage des supports textiles, tout en améliorant la souplesse des flancs et en protégeant ces derniers contre l'agression des rayons U.V. et de l'ozone atmosphérique ainsi que des coups indésirés lors d'accostages accidentels contre les trottoirs et lors du roulage sur des routes non asphaltées contre des cailloux.

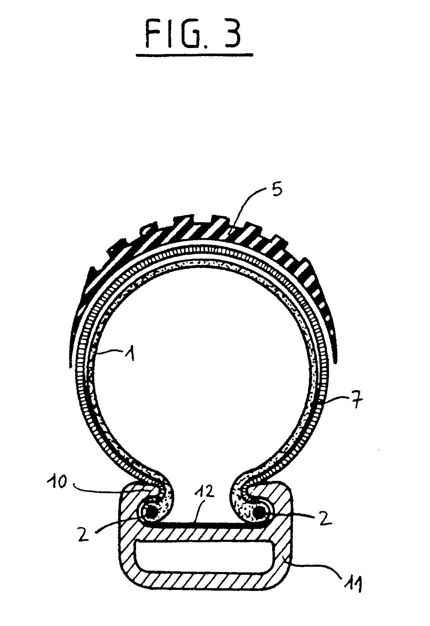

En même temps, la nappe 7 conforme à l'invention protège les flancs (et donc la carcasse 1) contre les risques de coupure dus à l'existence de bavures sur les crochets 10 d'une jante 11 (cf. la figure 3, dans laquelle la référence numérique 12 représente un ruban normalement disposé sur le fond de la jante pour protéger les talons du pneumatique contre une usure prématurée).

De ce qui précède, on comprend que la charge de noir de carbone normalement utilisée pour renforcer les flancs d'un pneumatique est avantageusement remplacée par une armature textile (en un tissu naturel ou synthétique tel que du coton ou du "nylon", respectivement) qui améliore sensiblement la résistance mécanique des flancs, – à savoir de l'élastomère transparent de la couche 7, qui peut être du caoutchouc naturel ou de synthèse –, tout en se prêtant à une décoration originale de ces derniers.

## Revendications

1. Pneumatique comportant :
- une couche interne, constituant la carcasse du pneumatique et définie par une première nappe textile (1) enduite d'élastomère, dans laquelle sont noyées deux tringles de renforcement (2) disposées à proximité des bords de cette première nappe et parallèlement à ces bords, dans des zones définissant des talons du pneumatique,
- une couche externe (4), disposée sur toute la largeur de la carcasse et dont deux portions latérales (6a, 6b) définissent les flancs du pneumatique au moins une desdites portions latérales (6a, 6b), à savoir, au moins un flanc, est pourvue de motifs décoratifs (8b), chaque flanc comportant une zone extrême destinée à venir en contact avec le rebord ou crochet (10) d'une jante (11), tandis qu'une portion centrale constitue le support d'une
- bande de roulement (5) dudit pneumatique, lequel pneumatique est caractérisé en ce que ladite couche externe, comprenant les flancs du pneumatique, est constituée par une deuxième nappe textile (7) enduite d'un élastomère transparent et ayant un coloris définissant un coloris de fond pour le flanc correspondant, et en ce que les motifs décoratifs (8b) sont réalisés en une ou plusieurs couleurs, différentes de la couleur de la nappe textile (7) correspondant aux flancs du pneumatique, et qui sont incorporés dans cette deuxième nappe textile (7).

## Ansprüche

1. Luftreifen,
- mit einer inneren Schicht, die die Karkasse des Reifens bildet und die durch eine erste textile Einlage (1) begrenzt ist, die mit einem Elastomer bestrichen ist und in der zwei Verstärkungsleisten (2) eingetaucht sind, die in der Nähe des Randes dieser ersten Einlage und parallel zu deren Rändern in den die Wulste des Reifens bildenden Bereichen angeordnet sind,
- mit einer äußeren Schicht (4), die auf der ganzen Breite der Karkasse angeordnet ist und von der zwei seitliche Abschnitte (6a, 6b) die Seitenflanken des Reifens begrenzen, wobei wenigstens eine der besagten Seitenflanken (6a, 6b), nämlich mindestens eine Seitenwand, mit Dekormustern (8b) versehen ist, wobei jede Seitenflanke einen äußeren Bereich umfaßt, der dazu vorgesehen ist, in Kontakt mit dem Rand oder der Nutpartie (10) einer Felge (11) zu gelangen, während ein Mittelabschnitt den Träger für
- eine Lauffläche (5) des besagten Reifens bildet, der **dadurch gekennzeichnet** ist, daß die besagte äußere Schicht, die die Seitenflanken des Reifens umfaßt, aus einer zweiten textilen Einlage (7) besteht, die mit einem transparenten Elastomer bestrichen ist und die eine Farbgebung aufweist, die eine Hintergrundfärbung für die entsprechende Seitenflanke definiert, und daß die Dekormuster (8b) in einer oder mehreren Farben ausgeführt sind, die von der Farbe der entsprechenden textilen Einlage (7) verschieden sind, die den Seitenflanken des Reifens entspricht, und daß sie in dieser zweiten textilen Einlage (7) enthalten sind.

## Claims

1. A tire comprising :
an inner layer constituting the carcass of the tire and defined by a first textile ply (1) coated with elastomer having two reinforcing rods (2) embedded therein, the reinforcing rods being disposed in the vicinity of the edges of said first ply and lying parallel to said edges in zones defining beading for the tire ;
an outer layer (4) disposed over the entire width of the carcass and having two lateral portions (6a, 6b) defining the walls of the tire, at least one of said lateral portions (6a, 6b), i.e. at least one of the walls, being provided with decorative patterns (8b), each wall including an end zone for coming into contact with the flange or lip (10) of a wheel rim (11), while a central portion constitutes the support for a tread (5) of said tire,
said tire being characterized in that said outer layer including the walls of the tire is constituted by a second textile ply (7) coated with a transparent elastomer and having coloring to define background coloring for the corresponding wall, and in that the decorative patterns (8b) are provided in one or more colors different from the color of the textile ply (7) corresponding to the walls of the tire, and which are incorporated in said second textile ply (7).

## FIG.1

## FIG.2

5

# FIG. 3